# EUROPÄISCHE PATENTSCHRIFT

(11) **EP 4 302 000 B1**
(45) Veröffentlichungstag und Bekanntmachung des Hinweises auf die Patenterteilung: **23.07.2025**
(21) Anmeldenummer: 22727324.0
(22) Anmeldetag: 05.05.2022
(51) Int. Cl.: F16H 57/04, F16H 48/00, F16H 48/08, B60K 1/00

(54) **SCHMIERMITTELVERSORGUNGSSYSTEM FÜR EINE ANTRIEBSVORRICHTUNG EINES ELEKTRISCH BETRIEBENEN FAHRZEUGS**
LUBRICANT SUPPLY SYSTEM FOR A DRIVE UNIT OF AN ELECTRICALLY OPERATED VEHICLE
SYSTÈME D'ALIMENTATION EN LUBRIFIANT POUR UNITÉ D'ENTRAÎNEMENT D'UN VÉHICULE ÉLECTRIQUE

(30) Priorität: 19.05.2021 DE 102021112967
(43) Veröffentlichungstag der Anmeldung: 10.01.2024
(73) Patentinhaber: Audi AG, 85045 Ingolstadt (DE)
(72) Erfinder: GREITER, Ivo, 85117 Eitensheim (DE)
(74) Vertreter: Bierschneider, Walter
(86) Internationale Anmeldenummer: PCT/EP2022/062104
(87) Internationale Veröffentlichungsnummer: WO 2022/243045

(56) Entgegenhaltungen:
- DE-A1- 102015 214 309
- DE-A1- 102016 110 915
- DE-A1- 102018 211 359
- DE-B3- 102016 211 226
- DE-B3- 102018 209 340

## Beschreibung

Die Erfindung betrifft ein elektrisch betriebenes Fahrzeug mit einer Antriebsvorrichtung nach dem Oberbegriff des Anspruches 1.

Bei einem elektrisch betriebenen, zweispurigen Fahrzeug kann beispielhaft eine elektrisch angetriebene Vorderachse eine Elektromaschine aufweisen. Diese kann in beliebiger Weise, gegebenenfalls zum Beispiel achsparallel zu den, zu den Fahrzeugrädern geführten Flanschwellen angeordnet sein. In diesem Fall kann die Elektromaschine über eine einfache oder doppelte Stirnrad-Getriebestufe auf ein Vorderachsdifferenzial und weiter auf die zu den Fahrzeugrädern geführten Flanschwellen der Fahrzeug-Vorderachse abtreiben.

Aus der DE 10 2018 211 359 A1 ist ein beispielhaftes Schmiermittelversorgungssystem für eine Antriebsvorrichtung bekannt, das eine Elektromaschine aufweist. Diese ist über eine Getriebeanordnung auf zumindest ein Fahrzeugrad abtreibbar. Das Schmiermittelversorgungssystem weist einen Elektromaschinen-Hydraulikkreis auf, in dem ein beliebiges Schmiermittel-Reservoir, zum Beispiel ein Schmiermitteltank, über eine Saugleitung mit einer Druckpumpe verbunden ist. Die Druckpumpe kann über eine Getriebe-Versorgungsleitung die Getriebeanordnung mit Schmiermittel versorgen. Zudem weist das Schmiermittelversorgungssystem einen Elektromaschinen-Hydraulikkreis auf, der über eine Elektromaschinen-Versorgungsleitung Schmiermittel bis in die Elektromaschine fördert.

In der obigen DE 10 2018 211 359 A1 ist die Getriebe-Versorgungsleitung strömungstechnisch vollständig entkoppelt von der Elektromaschinen-Versorgungsleitung. Von daher sind der Elektromaschinen-Hydraulikkreis und der Getriebe-Hydraulikkreis funktionell voneinander unabhängig. Ein solcher Aufbau des Schmiermittelversorgungssystems ist mit einem hohen Bauteil-Aufwand sowie mit einer komplizierten Schmiermittel-Kanalführung verbunden.

Aus der DE 10 2013 211 225 A1 ist eine Hybridantriebsanordnung bekannt. Aus der DE 10 2018 211 356 B4 ist ein Schmiermittelversorgungssystem für eine Antriebsvorrichtung eines elektrisch betriebenen Fahrzeugs bekannt. Aus der DE 10 2015 214 309 A1 ist eine Hohlwellenkühlung für einen Antrieb eines Elektrofahrzeugs bekannt. Aus der DE 10 2018 209 340 B3 ist eine Betriebsstrategie für einen Mehrphasensystem-Inverter einer elektrischen Antriebseinheit für ein Kraftfahrzeug bekannt. Die DE 10 2016 211 226 B3 offenbart ein gattungsgemäßes, elektrisch betriebenes Fahrzeug. Aus der DE 10 2016 110 915 A1 ist ein hydraulisches Kupplungsbetätigungssystem mit On-Demand Kupplungsbeölung bekannt.

Die Aufgabe der Erfindung besteht darin, ein elektrisch betriebenes Fahrzeug mit einer Antriebsvorrichtung bereitzustellen, bei dem im Vergleich zum Stand der Technik der Bauteil-Aufwand sowie der konstruktive Aufwand reduziert ist.

Die Aufgabe ist durch die Merkmale des Anspruches 1 gelöst. Bevorzugte Weiterbildungen der Erfindung sind in den Unteransprüchen offenbart.

Die Erfindung geht von einem Schmiermittelversorgungssystem aus, das einen Elektromaschinen-Hydraulikkreis aufweist. In dem Elektromaschinen-Hydraulikkreis ist ein Schmiermitteltank über eine Saugleitung mit einer Druckpumpe verbunden. Diese kann über eine Elektromaschinen-Versorgungsleitung Schmiermittel bis in die Elektromaschine fördern. Zudem weist das Schmiermittelversorgungssystem einen Getriebe-Hydraulikkreis auf, über den Schmiermittel bis in die Getriebeanordnung förderbar ist. Im Hinblick auf einen reduzierten Bauteilaufwand sowie eine konstruktiv einfache Ausführung ist gemäß dem Anspruch 1 die Druckpumpe als eine gemeinsame Druckpumpe für sowohl den Elektromaschinen-Hydraulikkreis als auch den Getriebe-Hydraulikkreis realisiert. Auf diese Weise ist das Schmiermittel im Pumpenbetrieb gleichzeitig sowohl im Elektromaschinen-Hydraulikkreis als auch im Getriebe-Hydraulikkreis umwälzbar.

Um eine zielgerichtete Schmierung von Getriebekomponenten zu ermöglichen, ist es bevorzugt, wenn mittels des Getriebe-Hydraulikkreises eine Trockensumpfschmierung durchgeführt wird. Das Schmiermittel kann in zumindest einer Getriebe-Versorgungsleitung zu zumindest einer Getriebe-Schmierstelle geführt werden. Es ist hervorzuheben, dass die Erfindung keinesfalls auf eine solche Trockensumpfschmierung beschränkt ist. Alternativ und/oder zusätzlich kann auch eine Nasssumpfschmierung erfolgen.

In einer technischen Umsetzung kann von der Druckpumpe eine Druckleitung wegführen. Diese kann sich an einer Verzweigungsstelle in die Elektromaschinen-Versorgungsleitung und in die Getriebe-Versorgungsleitung aufzweigen.

Dem Elektromaschinen-Hydraulikkreis und dem Getriebe-Hydraulikkreis sind als gemeinsame Komponenten zudem ein Schmiermittelsumpf sowie eine Rückführpumpe zugeordnet. Im Pumpenbetrieb kann sich das von der Getriebe-Schmierstelle abtropfende Schmiermittel in dem Schmiermittelsumpf sammeln. Gleichzeitig kann sich das von der Elektromaschine abfließende Schmiermittel ebenfalls im Schmiermittelsumpf sammeln. Von dort wird das Schmiermittel von der Rückführpumpe in den Schmiermitteltank rückgeführt. Im Hinblick auf eine weitere Reduzierung des Bauteil-Aufwands ist es bevorzugt, wenn die Druckpumpe und die Rückführpumpe in einer Zweifachpumpe mit einer gemeinsamem Antriebspumpe integriert sind. Die gemeinsame Antriebspumpe kann in trieblicher Verbindung mit einem Elektromotor sein. Dieser kann je nach Kühl-/ Schmierbedarf von einem elektronischen Pumpen-Steuergerät angesteuert werden.

Erfindungsgemäß weist die Getriebeanordnung ein Achsdifferential auf, das ausgangsseitig beidseitig über Flanschwellen mit Fahrzeugrädern trieblich verbunden ist. Eine der beiden Flanschwellen ist aufgeteilt in einen radseitigen Wellenabschnitt und in einen achsseitigen Wellenabschnitt. Diese sind über eine Trennkupplung miteinander koppelbar.

Erfindungsgemäß ist vorgesehen, dass das Schmiermittelversorgungssystem zusätzlich einen Trennkupplungs-Hydraulikkreis aufweist, über den die Trennkupplung mit Schmiermittel versorgbar ist. Erfindungsgemäß wird das Schmiermittel in zumindest einer Trennkupplungs-Versorgungsleitung zur Trennkupplung geführt. Im Hinblick auf eine weitere Bauteilreduzierung ist es bevorzugt, wenn die Druckpumpe auch für den Trennkupplungs-Hydraulickreis arbeitet. In diesem Fall wird im Pumpenbetrieb zusätzlich auch das Schmiermittel im Trennkupplungs-Hydraulikkreis umgewälzt.

Bevorzugt kann die Trennkupplungs-Versorgungsleitung stromab der gemeinsamen Druckpumpe angeschlossen sein. Beispielhaft kann die Druckleitung, die Getriebe-Versorgungsleitung oder die Elektromaschinen-Versorgungsleitung eine Verzweigungsstelle aufweisen, von der die Trennkupplung-Versorgungsleitung abzweigt. Das von der Trennkupplung abfließende Schmiermittel sammelt sich erfindungsgemäß im gemeinsamen Schmiermittelsumpf.

Bevorzugt ist es, wenn mittels des Trennkupplungs-Hydraulikkreises eine Innenbeölung der Trennkupplung durchgeführt wird. In diesem Fall wird dann in einem der Wellenabschnitte ein Schmiermittelkanal ausgebildet sein, der an einer Stirnseite des Wellenabschnitts in einen Kupplungsraum der Trennkupplung einmündet. Der Schmiermitteleintritt in den Kupplungsraum ist daher von radial innen, sodass eine Nutzung der Fliehkraft zur Verteilung nach radial außen sichergestellt ist, wodurch eine einwandfreie Beölung sämtlicher Kupplungskomponenten der Trennkupplung gewährleistet ist.

Nachfolgend ist ein Ausführungsbeispiel der Erfindung anhand der beigefügten Figuren beschrieben.

Es zeigen:
- Fig. 1: in einem Blockschaltdiagramm eine elektrisch angetriebene Fahrzeugachse eines Fahrzeugs mit zugeordnetem Schmiermittelversorgungssystem; und
- Fig. 2: in einer vergrößerten Teilschnittdarstellung die Fahrzeugachse.

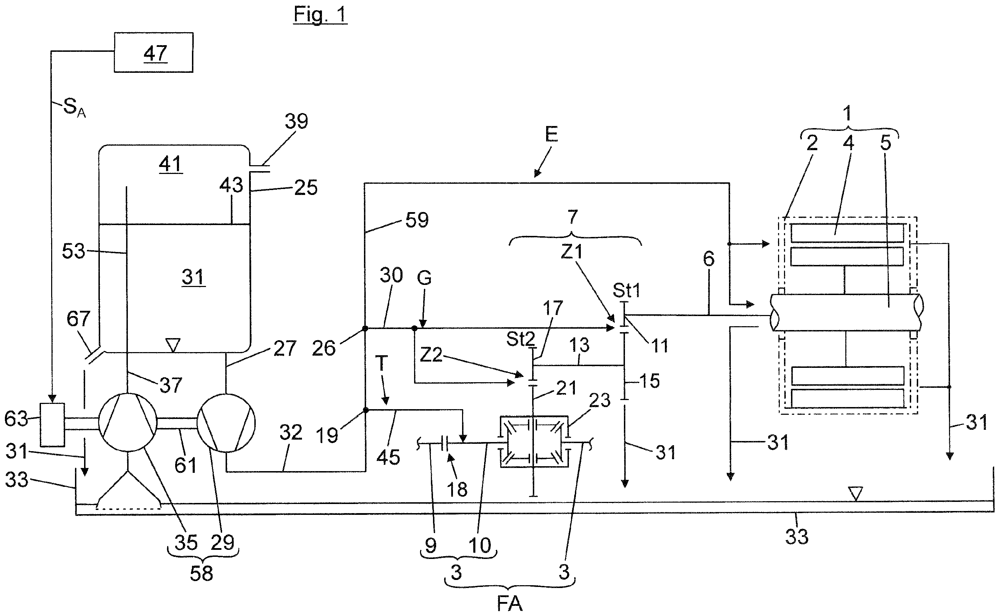

In der Fig. 1 ist beispielhaft eine elektrisch angetriebene Fahrzeugachse FA eines zweispurigen Fahrzeugs angedeutet. Die Fahrzeugachse FA weist eine Elektromaschine 1 auf, die im Quereinbau achsparallel zu den, zu den Fahrzeugrädern geführten Flanschwellen 3 angeordnet ist. Die linke Flanschwelle 3 ist in einen radseitigen Wellenabschnitt 9 und in einen achsseitigen Wellenabschnitt 10 aufgeteilt. Die beiden Wellenabschnitte 9, 10 der Flanschwelle 3 sind über eine Trennkupplung 18 miteinander koppelbar oder voneinander entkoppelbar. In einem Gehäuse 2 der Elektromaschine 1 ist ein Stator 4 mit einer damit zusammenwirkenden Rotor-Hohlwelle 5 angeordnet.

Die Rotor-Hohlwelle 5 der Elektromaschine 1 ist über eine nicht gezeigte Passverzahnung drehfest mit einer Getriebeeingangswelle 6 einer Getriebeanordnung 7 verbunden, die auf die beiden Flanschwellen 3 abtreibt. In der Fig. 1 weist die Getriebeanordnung 7 eine doppelte Stirnradstufe auf, bei der in einer ersten Zahnradstufe St1 ein auf der Getriebeeingangswelle 6 angeordnetes Festzahnrad 11 in Zahneingriff mit einem auf einer Zwischenwelle 13 angeordneten Festzahnrad 15 ist. Auf der Zwischenwelle 13 ist ein weiteres Festzahnrad 17 angeordnet, das unter Bildung einer zweiten Stirnradstufe St2 mit einem eingangsseitigen Zahnrad 21 eines Achsdifferenzials 23 kämmt. Das Achsdifferenzial 23 treibt beidseitig auf die zu den Fahrzeugrädern geführten Flanschwellen 3 ab.

In der Fig. 1 ist der elektrisch angetriebenen Fahrzeugachse FA ein Schmiermittelversorgungssystem zugeordnet, dessen Aufbau nachfolgend beschrieben ist: Demzufolge weist das Schmiermittelversorgungssystem einen Elektromaschinen-Hydraulikkreis E, einen Getriebe-Hydraulikkreis G und einen Trennkupplungs-Hydraulikkreis T auf. Dem Getriebe-Hydraulikkreis G, dem Elektromaschinen-Hydraulikkreis E und dem Trennkupplungs-Hydraulikkreis T sind die folgenden gemeinsamen Hydraulikkomponenten zugeordnet, nämlich ein Öltank 25, eine Druckpumpe 29, ein Ölsumpf 33 sowie eine Rückführpumpe 35. Der Öltank 25 ist über eine Saugleitung 27 mit der Druckpumpe 29 verbunden. Von der Druckpumpe 29 führt eine Druckleitung 32 weg, von der an einer ersten Verzweigungsstelle 19 eine Trennkupplungs-Versorgungsleitung 45 abzweigt, die bis zur Trennkupplung 18 führt. An einer zweiten Verzweigungsstelle 26 zweigt eine Elektromaschinen-Versorgungsleitung 59 ab, die bis zur Elektromaschine 1 führt, und eine Getriebe-Versorgungsleitung 30 ab, die zu Zahneingriffsstellen Z1, Z2 der Getriebeanordnung 7 führt.

Bei Durchführung einer Getriebe-Trockensumpfschmierung wird das vom Öltank 25 kommende Öl 31 über die Druckleitung 32 sowie über die Getriebe-Versorgungsleitung 30 zu den Zahneingriffsstellen Z1, Z2 der Getriebeanordnung 7 geführt. Von den Zahneingriffsstellen Z1, Z2 kann das Öl 31 abtropfen und sich im Ölsumpf 33 sammeln. Von dort wird das Öl 31 mit Hilfe der Rückführpumpe 35 in einer Rückführleitung 37 zurück in den Öltank 25 geführt. Der Öltank 25 ist nach außen hermetisch dicht ausgelegt. Für eine Entlüftung des Öltanks 25 ist eine Entlüftungsleitung 39 vorgesehen, mittels der der Tankinnenraum 41 oberhalb eines Ölspiegels 43 nach tankaußen verbunden ist. Die Rückführleitung 37 ist in der Fig. 1 an einem vertikal nach oben verlaufenden Steigrohr 53 angeschlossen, das den Ölspiegel 43 mit einem Überstand überragt und an seinem oberen Ende einen freien Überlauf bildet, über den rückgeführtes Öl 31 schaumfrei in den Öltank 25 einströmen kann.

Im Elektromaschinen-Hydraulikkreis E ist gemäß der Fig. 1 der Öltank 25, die Druckpumpe 29, der Ölsumpf 33 sowie die Rückführleitung 37 mitsamt Rückführpumpe 35 eingebunden. Mittels der Druckpumpe 29 wird das Öl 31 über die Druckleitung 32 und die Elektromaschinen-Versorgungsleitung 59 bis zur Elektromaschine 1 geführt. Das von der Elektromaschine 1 abfließende Öl 31 sammelt sich im Ölsumpf 33 und wird von dort mittels der Rückführpumpe 35 in der Rückführleitung 37 zurück in den Öltank 25 geführt. Im Trennkupplungs-Hydraulikkreis T ist ebenfalls der Öltank 25, die Druckpumpe 29, der Ölsumpf 33 sowie die Rückführleitung 37 mitsamt Rückführpumpe 35 eingebunden. Mittels der Druckpumpe 29 wird das Öl 31 über die Druckleitung 32 und die Trennkupplungs-Versorgungsleitung 45 bis zur Elektromaschine 1 geführt. Das von der Elektromaschine 1 abfließende Öl 31 sammelt sich im Ölsumpf 33 und wird von dort mittels der Rückführpumpe 35 in der Rückführleitung 37 zurück in den Öltank 25 geführt.

In der Fig. 1 bilden die Druckpumpe 29 und die Rückführpumpe 35 eine Zweifachpumpe 58 mit einer gemeinsamen Antriebswelle 61. Die gemeinsame Antriebswelle 61 ist in trieblicher Verbindung mit einem als Stellmotor wirkenden Elektromotor 63.

In der Fig. 1 ist der Elektromotor 63 in Signalverbindung mit einem elektronischen Pumpen-Steuergerät 47. Das elektronische Pumpen-Steuergerät 47 ermittelt in Abhängigkeit von Fahrbetriebsparametern, ob ein Kühl-/Schmierbedarf in der Getriebeanordnung 7 und/oder in der Elektromaschine 1 vorliegt. Bei Vorliegen eines Kühl-/Schmierbedarfs aktiviert das Pumpen-Steuergerät 65 die Zweifachpumpe 58.

In der Fig. 1 ist der Öltank 25 um einen Höhenversatz geodätisch oberhalb des Ölsumpfes 33 angeordnet. Am Tankboden weist der Öltank 25 einen Öl-Ablauf 67 auf, von dem permanent ein geringer Öl-Volumenstrom unter Schwerkraftwirkung direkt in den Ölsumpf 33 abfließt.

In einem normalen Fahrbetrieb mit aktivierter Zweifachpumpe 58 erfolgt sowohl im Elektromaschinen-Hydraulikkreis E, im Getriebe-Hydraulikkreis G als auch im Trennkupplungs-Hydraulikkreis T eine Öl-Umwälzung. Das heißt dass die Schmiermittelstellen Z1, Z2 über die Getriebe-Versorgungsleitungen 33 mit Öl versorgt werden, das anschließend in den Ölsumpf 33 abtropft.

Gleichzeitig wird die Elektromaschine 1 über die Elektromaschinen-Versorgungsleitung 59 mit Öl versorgt, das anschließend wieder in den Ölsumpf 33 abtropft. Ferner wird die Trennkupplung über die Trennkupplungs-Versorgungsleitung 45 mit Öl versorgt, das ebenfalls wieder im Ölsumpf 33 gesammelt wird.

Die Elektromaschine 1 ist als nasslaufende Elektromaschine realisiert, bei der das Öl 31 nicht nur eine Rotorinnenkühlung bewirkt, sondern zusätzlich auch die Wicklungen der Elektromaschine 1 kühlt.

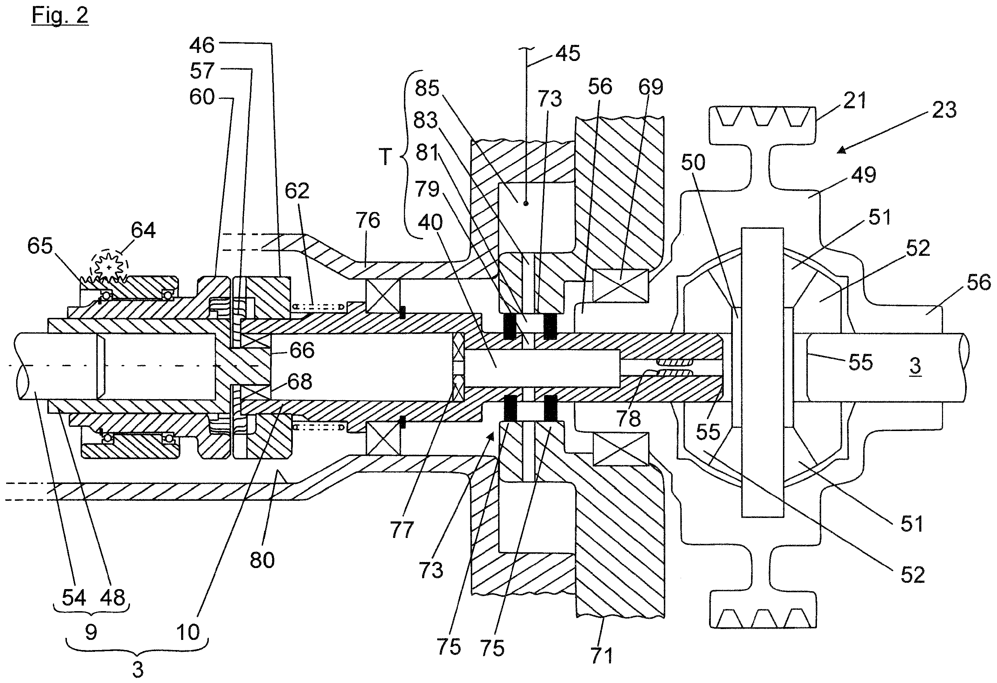

In Figur 1 ist die Trennkupplungs-Versorgungsleitung 45 bis zu einer Schmiermittelzulaufstelle der Trennkupplung 18 geführt. Der Trennkupplungs-Hydraulikkreis T so in der Figur 2 beispielhaft so ausgelegt, dass nicht nur eine Innenbeölung der Trennkupplung 18, sondern auch eine Innenbeölung des Achsdifferentials 23 stattfindet.

Nachfolgend ist der Getriebeaufbau der in der Figur 2 gezeigten Fahrzeugachse FA beschrieben: Demnach weist das Achsdifferential 23 ein Ausgleichsgehäuse 49 auf, in dessen Gehäuseinneren 50 zwei einander koaxial mit Abstand gegenüberliegende Ausgleichskegelräder 51 drehgelagert sind. Die beiden Ausgleichskegelräder 51 sind auf einem Achsdifferentialbolzen drehgelagert, der drehfest mit dem Ausgleichsgehäuse 49 verbunden ist. Zudem sind im Gehäuseinneren 50 des Ausgleichsgehäuses 49 zwei einander koaxial mit Abstand gegenüberliegende Achskegelräder 52 drehgelagert. Diese sind rechtwinklig zu den Ausgleichskegelrädern 51 angeordnet. Jedes Achskegelrad 52 ist jeweils mit den beiden Ausgleichskegelrädern 51 in Zahneingriff. Wie aus der Figur 2 hervorgeht, sitzt das linke Achskegelrad 52 auf dem achsseitigen Wellenabschnitt 10 der linken Flanschwelle 3, während das rechte Achskegelrad 52 auf der rechten Flanschwelle 3 sitzt. Der Wellenabschnitt 10 sowie die rechte Flanschwelle 3 ragen jeweils mit ihren Stirnseiten 55 in das Gehäuseinnere 50 ein. Zudem ist der Wellenabschnitt 10 der linken Flanschwelle 3 durch einen Nabenabschnitt 56 des Ausgleichsgehäuses 49 nach gehäuseaußen in Richtung auf die Trennkupplung 18 geführt.

Es ist hervorzuheben, dass die Erfindung nicht auf ein solches Kegelrad-Differenzial beschränkt ist, sondern beliebig andere Differenziale anwendbar sind, zum Beispiel ein Stirnrad-Differenzial.

Wie aus der Figur 2 weiter hervorgeht, ist der radseitige Wellenabschnitt 9 der linken Flanschwelle 3 aus einer in der Fahrzeugquerrichtung y fahrzeuginneren Zwischenwelle 48 und einer zum Fahrzeugrad führenden Gelenkwelle 54 aufgebaut. Die Zwischenwelle 48 ist über eine Steckverzahnung an der Gelenkwelle 54 angebunden.

In der Figur 2 ist der achsseitige Wellenabschnitt 10 in der Axialrichtung betrachtet über einen Kupplungsraum 57 der Trennkupplung 18 von der Zwischenwelle 48 beabstandet. Die Trennkupplung 18 ist in der Figur 2 als eine Klauenkupplung realisiert, die achsseitige Schaltklauen und radseitige Schaltklauen aufweist, die bei geschlossener Trennkupplung 18 miteinander in Formschlussverbindung sind. Die radseitigen Schaltklauen sind in der Figur 2 Bestandteil einer Schiebemuffe 60, die auf einer Steckverzahnung der Zwischenwelle 48 drehfest, jedoch axial verschiebbar angeordnet ist. Die achsseitigen Schaltklauen sind auf einem Trägerring 46 ausgebildet, der über eine Steckverzahnung auf dem achsseitigen Wellenabschnitt 10 drehfest, jedoch axial verschiebbar gelagert ist. Der Trägerring 46 ist auf seiner, den radseitigen Klauen gegenüberliegenden Seite mittels einer Überlastfeder 62 gegen den achsseitigen Wellenabschnitt 10 abgestützt.

Die auf der Zwischenwelle 48 axial verschiebbar angeordnete Schiebemuffe 60 ist in der Figur 2 über einen Aktuator 64 betätigbar, der zum Beispiel als Elektromotor realisiert ist. Der Aktuator 64 ist über eine bevorzugt selbsthemmende Getriebestufe in trieblicher Verbindung mit einer Aktuatorhülse 65. Diese ist auf einem zylindrischen Schiebemuffen-Außenumfang angeordnet. Zur Drehentkopplung von der, im Betrieb drehenden Schiebemuffe 60 ist die Aktuatorhülse 65 über zwei Wälzlager auf dem zylindrischen Schiebemuffen-Außenumfang gelagert.

Der achsseitige Wellenabschnitt 10 ist in der Figur 2 als eine Hohlwelle realisiert, deren hohlzylindrisches Innenprofil einen später beschriebenen Schmiermittelkanal 40 bildet. Ebenso ist auch die Zwischenwelle 48 als eine Hohlwelle realisiert. Zudem weist die Zwischenwelle 48 einen durchmesserreduzierten Lagerzapfen 66 auf, der über ein Pilotlager 68 am Innenumfang des achsseitigen Wellenabschnitts 10 abgestützt ist.

In der Figur 2 ist die Zwischenwelle 48 auf ihrer kupplungszugewandten Seite verschlossen, um beim Ziehen einer gesteckten Gelenkwelle (wie in Figur 2 dargestellt) einen Ölaustritt aus der Achse zu vermeiden. Gegebenenfalls kann die Zwischenwelle 48 auf ihrer kupplungszugewandten Seite auch offen sein, um die Passverzahnung zu schmieren.

Das sich im Betrieb drehende Ausgleichsgehäuse 49 ist über ein Drehlager 69 in einem Achsdifferentialgehäuse 71 drehgelagert. Gemäß der Figur 2 weist das Achsdifferentialgehäuse 71 eine Wellen-Durchführungsöffnung 73 auf, durch die der achsseitige Wellenabschnitt 10 geführt ist. Die Wellen-Durchführungsöffnung 73 des Achsdifferentialgehäuses 71 ist über zwei axial beabstandete Ringdichtungen 75 weitgehend schmiermitteldicht abgedichtet, die in Radialrichtung zwischen der Wellen-Durchführungsöffnung 73 und dem achsseitigen Wellenabschnitt 10 abgestützt sind. Zudem ist in der Figur 2 der Schmiermittelkanal 40 über einen Querkanal 79 mit einem Ringspalt 81 in Verbindung, der sich zwischen den beiden benachbarten Ringdichtungen 75 erstreckt. Der Ringspalt 81 bildet einen Schmiermitteldruckraum, der über eine Zulaufleitung 83 mit einem Schmiermittelzulauf 85 verbunden ist. Am Schmiermittelzulauf 85 ist wiederum die Trennkupplungs-Versorgungsleitung 45 angeschlossen.

In der Figur 2 mündet somit der Schmiermittelkanal 40 des Wellenabschnitts 10 sowohl in den Kupplungsraum 57 der Trennkupplung 18 als auch in das Gehäuseinnere 50 des Ausgleichsgehäuses 49. Die dem Achsdifferential 23 zugewandte Schmiermittelkanalöffnung und die, dem Kupplungsraum 57 zugewandte Schmiermittelkanalöffnung sind zueinander in Axialflucht positioniert. Zudem weisen die beiden Kanalöffnungen gleiche Strömungsquerschnitte auf. Auf diese Weise kann im Schmiermittelbetrieb eine in etwa gleichmäßige Schmiermittelzufuhr zum Achsdifferential 23 und zur Trennkupplung 18 gewährleistet werden. In der Figur 2 ist die, dem Kupplungsraum 57 zugewandte Schmiermittelkanalöffnung in einer Blende 77 ausgebildet.

Es ist hervorzuheben, dass die Strömungsquerschnitte nicht zwingend gleich sein müssen, zum Beispiel wenn keine 50:50-Aufteilung gewünscht oder erforderlich ist. Das heißt, die Strömungsquerschnitte können auch zielgerichtet variiert werden, um einen Einfluss auf die Volumenstromaufteilung zu nehmen. So können beispielsweise Blendendurchmesser (das heißt Innendurchmesser) der beiden Blenden 77 und 78 unterschiedlich groß gewählt werden. Der Gesamtölvolumenstrom im Schmiermittelkanal 40 kann daher mithilfe der Blenden 77 und 78 zielgerichtet aufgeteilt werden.

Wie bereits oben erwähnt, kann durch Verwendung der Blenden 77, 78 der Ölvolumenstrom im Hydraulikkreislauf für die unterschiedlichen Komponenten aufgeteilt werden. Die Blende 78 ist in unterschiedlichen Ausführungsformen realisierbar. Beispielhaft kann eine Madenschraube verwendet werden, welche im Inneren die Blendengeometrie abbildet und an der, dem Differential zugewandten Seite in den achsseitigen Wellenabschnitt 8 eingeschraubt wird. Die Blende 77 ist ebenfalls in unterschiedlichen Ausführungsformen realisierbar. Beispielsweise kann sie als Schraube realisiert sein, welche eine entsprechende Blendengeometrie im Inneren abbildet und von der kupplungszugewandten Seite eingeschraubt wird. Alternativ kann die Blende (zum Beispiel in einer Serienfertigung) eingepresst sein oder direkt in die Welle gebohrt sein.

Da der Öldruck für Rotorinnenkühlung/Getriebeschmierung nicht so hoch ist, sind die, im achsseitigen Wellenabschnitt 10 angeordneten Blenden 77 und 78 für die Ölvolumenstromaufteilung vorteilhaft, da so im Ringspalt 81 noch ein größerer Druck herrscht, um das Öl aus dem Ringspalt 81 in den achsseitigen Wellenabschnitt 10 zu bekommen.

Die oben beschriebenen Kupplungskomponenten sind in der Figur 2 allesamt in einem Kupplungsgehäuse 76 angeordnet. Das von den Kupplungskomponenten der Trennkupplung 18 abfließende Schmiermittel 31 sammelt sich in einem Schmiermittelsumpf 80 des Kupplungsgehäuses 76, der strömungstechnisch mit dem Schmiermittelsumpf 33 verbunden ist. Auf diese Weise kann eine Tauchschmierung erfolgen, bei der die im Betrieb mitdrehenden Kupplungskomponenten in den Schmiermittelsumpf 80 eintauchen können, der strömungstechnisch mit dem Schmiermittelsumpf 33 verbunden ist. Durch die Gestaltung des Kupplungsgehäuses 76 selbst oder durch entsprechend eingebrachte Stauelemente vor dem Ablauf zum Schmiermittelsumpf 33, ist es möglich den Ölstand im Kupplungsgehäuse 76 für den Fall einer zusätzlich gewünschten Tauchschmierung der Kupplungskomponenten einzustellen.

In der Figur 2 wird im Fahrbetrieb das Schmiermittel 31 im Trennkupplungs-Hydraulikkreis T wie folgt umgewälzt: So wird das Schmiermittel 31 zunächst über den Schmiermittelzulauf 85 sowie über die Zulaufleitung 83 in den Schmiermitteldruckraum 81 gefördert. Von dort wird das Schmiermittel 31 nach radial innen in den Schmiermittelkanal 40 des achsseitigen Wellenabschnitts 10 geleitet. Das im Schmiermittelkanal 40 befindliche Schmiermittel 31 strömt an der Stirnseite 55 des Wellenabschnitts 10 in das Gehäuseinnere 50 des Achsdifferentials 23 ein, von wo es fliehkraftbedingt nach außen verdrängt wird, und zwar unter Schmierung der Achsdifferential-Komponenten. Das aus dem Achsdifferential 23 abfließende Schmiermittel 31 wird anschließend im Schmiermittelsumpf 33 (Figur 1) gesammelt. Gleichzeitig wird das Schmiermittel 31 vom Schmiermittelkanal 40 in den Kupplungsraum 57 gefördert. Das aus dem Kupplungsgehäuse 76 abfließende Schmiermittel 31 wird anschließend im Schmiermittelsumpf 33 gesammelt.

In dem gezeigten Ausführungsbeispiel kann das Schmiermittel 31 nicht in das Innenprofil der Zwischenwelle 48 geleitet werden, da ansonsten Schmiermittel 31 aus dem Aggregat austritt, wenn die Gelenkwelle gezogen wird. Gegebenenfalls kann das Schmiermittel 31 auch über eine nicht gezeigte Schmiermittelöffnung im Lagerzapfen 66 der Zwischenwelle 48 in das Zwischenwellen-Innenprofil geleitet werden, um eine geschmierte Passverzahnung zu ermöglichen.

Der Abfluss des Schmiermittels aus dem Differenzial 23 erfolgt vorteilhafterweise hinter den Achswellenkegelrädern 52 (das heißt zwischen Achswellenkegelrad 52 und Nabenabschnitt 56 des Ausgleichsgehäuse 49). Zwischen den Achswellenkegelrädern 52 und dem Ausgleichsgehäuse 49 befinden sich Anlaufscheiben, welche ebenfalls gut geschmiert werden müssen. Tritt das Schmiermittel 31 dort aus, kann sichergestellt werden, dass diese Stellen gut geschmiert werden. Dazu muss das Ausgleichsgehäuse 49 ansonsten natürlich verschlossen (oder weitestgehend verschlossen) sein und darf keine (größeren) Öffnungen aufweisen. So ist gewährleistet, dass das Schmiermittel mittels Fliehkraft die zu schmierenden Stellen am Differentialbolzen und Anlaufstellen der Achswellenkegelräder 52 erreicht.

Alternativ zur Figur 2 kann der achsseitige Wellenabschnitt 10 nicht als eine Hohlwelle, sondern als eine Halbhohlwelle realisiert sein, bei der Schmiermittelkanal 40 in Richtung auf das Achsdifferential 23 geschlossen ist. Auf diese Weise erfolgt lediglich eine Innenbeölung der Trennkupplung 10, nicht jedoch eine Innenbeölung des Ausgleichsdifferentials 23.

### BEZUGSZEICHENLISTE:

- 1: Elektromaschine
- 2: Elektromaschinen-Gehäuse
- 3: Flanschwellen
- 4: Stator
- 5: Rotor-Hohlwelle
- 6: Getriebeeingangswelle
- 7: Getriebeanordnung
- 8: Gehäusewände
- 9: radseitiger Wellenabschnitt
- 10: achsseitiger Wellenabschnitt
- 11: Festzahnrad
- 13: Zwischenwelle
- 15: Festzahnrad
- 17: Festzahnrad
- 18: Trennkupplung
- 19: Verzweigungsstelle
- 21: eingangsseitiges Zahnrad
- 23: Achsdifferenzial
- 25: Schmiermitteltank
- 26: Verzweigungsstelle
- 27: Saugleitung
- 29: Druckpumpe
- 30: Getriebe-Versorgungsleitungen
- 31: Schmiermittel
- 32: Druckleitung
- 33: Schmiermittelsumpf
- 35: Rückführpumpe
- 37: Rückführleitung
- 39: Entlüftungsleitung
- 40: Schmiermittelkanal
- 43: Schmiermittel-Spiegel
- 41: Tankinnenraum
- 46: Trägerring
- 47: Pumpen-Steuergerät
- 48: Zwischenwelle
- 49: Ausgleichsgehäuse
- 50: Gehäuseinneres
- 51: Ausgleichskegelrad
- 52: Achskegelrad
- 54: Gelenkwelle
- 55: Stirnseiten
- 56: Nabenabschnitte
- 57: Kupplungsraum
- 58: Zweifachpumpe
- 59: Elektromaschinen-Versorgungsleitung
- 60: Schiebemuffe
- 61: gemeinsame Antriebswelle
- 62: Überlastfeder
- 63: Elektromotor
- 64: Aktuator
- 65: Aktuator-Hülse
- 66: durchmesserreduzierten Lagerzapfen der Zwischenwelle
- 67: Schmiermittel-Ablauf
- 68: Pilotlager
- 69: Drehlager
- 71: Achsdifferentialgehäuse
- 73: Wellen-Durchführungsöffnung
- 75: Ringdichtungen
- 76: Kupplungsgehäuse
- 77, 78: Blenden
- 79: Querkanal
- 80: Schmiermittelsumpf
- 81: Ringspalt
- 83: Zulaufleitung
- 85: Schmiermittelzulauf
- FA: Fahrzeugachse
- G: Getriebe-Hydraulikkreis
- R: Rotor-Hydraulikkreis
- T: Trennkupplungs-Hydraulikkreis
- Z1, Z2: Zahneingriffsstellen

## Patentansprüche

1. Elektrisch betriebenes Fahrzeug mit einer Antriebsvorrichtung, die ein Schmiermittelversorgungssystem aufweist, mit zumindest einer Elektromaschine (1), die über eine Getriebeanordnung (7) auf zumindest ein Fahrzeugrad abtreibt, mit einem Elektromaschinen-Hydraulikkreis (E), in dem ein Schmiermitteltank (25) über eine Saugleitung (27) mit einer Druckpumpe (29) verbunden ist, die über eine Elektromaschinen-Versorgungsleitung (59) Schmiermittel (31) bis in die Elektromaschine (1) fördert, und mit einem Getriebe-Hydraulikkreis (G), der dazu ausgebildet ist, dass über den Getriebe-Hydraulikkreis (G) Schmiermittel (31) bis in die Getriebeanordnung (7) förderbar ist, und wobei die Druckpumpe (29) als gemeinsame Druckpumpe sowohl dem Elektromaschinen-Hydraulikkreis (E) als auch dem Getriebe-Hydraulikkreis (G) zugeordnet und derart ausgebildet ist, dass im Pumpenbetrieb sowohl im Elektromaschinen-Hydraulikkreis (E) als auch im Getriebe-Hydraulickreis (G) Schmiermittel (31) umwälzbar ist,
**dadurch gekennzeichnet,**
**dass** der Elektromaschinen-Hydraulikkreis (E) und der Getriebe-Hydraulikkreis (G) als weitere gemeinsame Komponenten einen Schmiermittelsumpf (33) sowie eine Rückführpumpe (35), die dazu ausgebildet ist, Schmiermittel (31) in den Schmiermitteltank (25) rückzuführen, aufweisen,
**dass** die Getriebeanordnung (7) ein Achsdifferential (23) aufweist, das ausgangsseitig beidseitig über Flanschwellen (3) mit Fahrzeugrädern trieblich verbunden ist,
**dass** eine der Flanschwellen (3) aufgeteilt ist in einen radseitigen Wellenabschnitt (9) und in einen achsseitigen Wellenabschnitt (10), die über eine Trennkupplung (18) miteinander koppelbar sind,
**dass** das Schmiermittelversorgungssystem einen Trennkupplungs-Hydraulikkreis (T) aufweist, der dazu ausgebildet ist, dass über den Trennkupplungs-Hydraulikkreis (T) die Trennkupplung (18) mit Schmiermittel (31) versorgbar ist,
**dass** das Schmiermittel (31) in zumindest einer Trennkupplungs-Versorgungsleitung (45) zur Trennkupplung (18) geführt ist,
und **dass** von der Trennkupplung (18) abfließendes Schmiermittel (31) sich im gemeinsamen Schmiermittelsumpf (33) sammelt.

2. Elektrisch betriebenes Fahrzeug nach Anspruch 1, **dadurch gekennzeichnet, dass** das Schmiermittel (31) in zumindest einer Getriebe-Versorgungsleitung (30) zu zumindest einer Getriebe-Schmierstelle (Z1, Z2) führbar ist.

3. Elektrisch betriebenes Fahrzeug nach Anspruch 2, **dadurch gekennzeichnet, dass** von der Druckpumpe (29) eine Druckleitung (32) wegführt, die sich an einer Verzweigungsstelle (26) in die Elektromaschinen-Versorgungsleitung (59) und in die Getriebe-Versorgungsleitung (30) aufzweigt.

4. Elektrisch betriebenes Fahrzeug nach Anspruch 2 oder 3, **dadurch gekennzeichnet, dass** das von der Getriebe-Schmierstelle (Z1, Z2) abtropfende Schmiermittel (31) sich im Schmiermittelsumpf (33) sammelt und das von der Elektromaschine (1) abfließende Schmiermittel (31) sich ebenfalls im Schmiermittelsumpf (33) sammelt, und von dort mittels der dazu ausgebildeten Rückführpumpe (35) in den Schmiermitteltank (25) rückführbar ist.

5. Elektrisch betriebenes Fahrzeug nach Anspruch 4, **dadurch gekennzeichnet, dass** die Druckpumpe (29) und die Rückführpumpe (35) eine Zweifachpumpe (58) mit einer gemeinsamen Antriebswelle (61) bilden, und dass die gemeinsame Antriebswelle (61) mit einem Elektromotor (63) in trieblicher Verbindung ist, der von einem dazu ausgebildeten Pumpen-Steuergerät (47) ansteuerbar ist.

6. Elektrisch betriebenes Fahrzeug nach einem der vorhergehenden Ansprüche, **dadurch gekennzeichnet, dass** die Druckpumpe (29) ebenfalls dem Trennkupplungs-Hydraulikkreis (T) zugeordnet ist, so dass das elektrisch betriebene Fahrzeug dazu ausgebildet ist, dass im Pumpenbetrieb zusätzlich auch im Trennkupplungs-Hydraulikkreis (T) Schmiermittel (31) umwälzbar ist.

7. Elektrisch betriebenes Fahrzeug nach Anspruch 3 und Anspruch 6,
**dadurch gekennzeichnet, dass** die Druckleitung (32), die Getriebe-Versorgungsleitung (30) oder die Elektromaschinen-Versorgungsleitung (59) eine Verzweigungsstelle aufweist, von der die Trennkupplungs-Versorgungsleitung abzweigt.

8. Elektrisch betriebenes Fahrzeug nach einem der vorhergehenden Ansprüche, **dadurch gekennzeichnet, dass** der Trennkupplungs-Hydraulikkreis (T) dazu ausgebildet ist, dass mittels des Trennkupplungs-Hydraulikkreises (T) eine Innenbeölung der Trennkupplung (18) durchführbar ist, bei der in einem der Wellenabschnitte (9, 10) ein Schmiermittelkanal (40) ausgebildet ist, der an einer Stirnseite des Wellenabschnitts (10) in einen Kupplungsraum (47) der Trennkupplung (18) einmündet.

## Claims

1. Electrically operated vehicle having a drive apparatus which has a lubricant supply system, having at least one electric machine (1) which outputs power to at least one vehicle wheel via a gear mechanism arrangement (7), having an electric machine hydraulic circuit (E) in which a lubricant tank (25) is connected via a suction line (27) to a pressure pump (29) which conveys lubricant (31) as far as the electric machine (1) via an electric machine supply line (59), and having a gear mechanism hydraulic circuit (G), which is constructed so that lubricant (31) can be conveyed via the gear mechanism hydraulic circuit (G) as far as the gear mechanism arrangement (7), and wherein the pressure pump (29) is associated as a common pressure pump with both the electric machine hydraulic circuit (E) and the gear mechanism hydraulic circuit (G) and is constructed so that lubricant (31) during pump operation can be recirculated both in the electric machine hydraulic circuit (E) and in the gear mechanism hydraulic circuit (G),
**characterized in that**
the electric machine hydraulic circuit (E) and the gear mechanism hydraulic circuit (G) have as additional common components a lubricant sump (33) and a return pump (35) which is constructed to guide lubricant (31) back into the lubricant tank (25),
**in that** the gear mechanism arrangement (7) has an axle differential (23) which is drivingly connected to vehicle wheels at the output at both sides via flange shafts (3),
**in that** one of the flange shafts (3) is divided into a shaft portion (9) on the wheel and a shaft portion (10) on the axle which can be connected to each other via a separation clutch (18),
**in that** the lubricant supply system has a separation clutch hydraulic circuit (T) which is constructed so that via the separation clutch hydraulic circuit (T) the separation clutch (18) can be supplied with lubricant (31), **in that** the lubricant (31) is guided in at least one separation clutch supply line (45) to the separation clutch (18),
and **in that** lubricant (31) which flows away from the separation clutch (18) is collected in the common lubricant sump (33).

2. Electrically operated vehicle according to Claim 1, **characterized in that** the lubricant (31) can be guided in at least one gear mechanism supply line (30) to at least one gear mechanism lubrication location (Z1, Z2).

3. Electrically operated vehicle according to Claim 2, **characterized in that** a pressure line (32) leads away from the pressure pump (29) and it branches out at a branching location (26) into the electric machine supply line (59) and the gear mechanism supply line (30).

4. Electrically operated vehicle according to Claim 2 or 3, **characterized in that** the lubricant (31) which drips from the gear mechanism lubrication location (Z1, Z2) is collected in the lubricant sump (33) and the lubricant (31) which flows out of the electric machine (1) is also collected in the lubricant sump (33) and, from there, can be guided back by the return pump (35) which is constructed for this purpose into the lubricant tank (25).

5. Electrically operated vehicle according to Claim 4, **characterized in that** the pressure pump (29) and the return pump (35) form a double pump (58) with a common drive shaft (61), and **in that** the common drive shaft (61) is in driving connection with an electric motor (63) which can be controlled by a pump control device (47) which is constructed for this purpose.

6. Electrically operated vehicle according to one of the preceding claims, **characterized in that** the pressure pump (29) is also associated with the separation clutch hydraulic circuit (T) so that the electrically operated vehicle is constructed so that lubricant (31) can also additionally be recirculated in the separation clutch hydraulic circuit (T) during pump operation.

7. Electrically operated vehicle according to Claim 3 and Claim 6, **characterized in that** the pressure line (32), the gear mechanism supply line (30) or the electric machine supply line (59) has a branching location from which the separation clutch supply line branches.

8. Electrically operated vehicle according to one of the preceding claims, **characterized in that** the separation clutch hydraulic circuit (T) is constructed so that an internal lubrication of the separation clutch (18) can be carried out by means of the separation clutch hydraulic circuit (T), wherein a lubricant channel (40) is constructed in one of the shaft portions (9, 10) and opens at a front side of the shaft portion (10) into a clutch chamber (47) of the separation clutch (18).

## Revendications

1. Véhicule à fonctionnement électrique comprenant un dispositif d'entraînement, lequel possède un système d'alimentation en lubrifiant, comprenant au moins une machine électrique (1) qui, par le biais d'un arrangement de transmission (7), entraîne au moins une roue du véhicule, comprenant un circuit hydraulique de moteur électrique (E) dans lequel un réservoir de lubrifiant (25) est relié par le biais d'une conduite d'aspiration (27) à une pompe de pression (29) qui, par le biais d'une conduite d'alimentation de machine électrique (59), transporte du lubrifiant (31) jusque dans la machine électrique (1), et comprenant un circuit hydraulique de transmission (G) qui est conçu de manière à ce que le lubrifiant (31) puisse être transporté jusque dans l'arrangement de transmission (7) par le biais du circuit hydraulique de transmission (G), et la pompe de pression (29) étant associée en tant que pompe de pression commune à la fois au circuit hydraulique de machine électrique (E) et au circuit hydraulique de transmission (G) et étant configurée de telle sorte que, en mode pompage, le lubrifiant (31) peut circuler aussi bien dans le circuit hydraulique de machine électrique (E) que dans le circuit hydraulique de transmission (G),
**caractérisé en ce que**
le circuit hydraulique de machine électrique (E) et le circuit hydraulique de transmission (G) possèdent, en tant que composants communs supplémentaires, un carter à lubrifiant (33) ainsi qu'une pompe de retour (35), laquelle est configurée pour renvoyer le lubrifiant (31) dans le réservoir de lubrifiant (25),
l'arrangement de transmission (7) comporte un différentiel d'essieu (23) qui, côté sortie, est relié cinématiquement aux roues du véhicule par le biais d'arbres à bride (3) des deux côtés,
l'un des arbres à bride (3) est divisé en une portion d'arbre côté roue (9) et en une portion d'arbre côté essieu (10), lesquelles peuvent être couplées l'une à l'autre par le biais d'un accouplement séparateur (18),
le système d'alimentation en lubrifiant possède un circuit hydraulique d'accouplement séparateur (T), lequel est configuré de telle sorte que l'accouplement séparateur (18) peut être alimenté en lubrifiant (31) par le biais du circuit hydraulique d'accouplement séparateur (T),
le lubrifiant (31) est acheminé à l'accouplement séparateur (18) dans au moins une conduite d'alimentation d'accouplement séparateur (45),
et le lubrifiant (31) qui s'écoule de l'accouplement séparateur (18) s'accumule dans le carter à lubrifiant (33) commun.

2. Véhicule à fonctionnement électrique selon la revendication 1, **caractérisé en ce que** le lubrifiant (31) peut être acheminé dans au moins une conduite d'alimentation de transmission (30) vers au moins un point de lubrification de transmission (Z1, Z2).

3. Véhicule à fonctionnement électrique selon la revendication 2, **caractérisé en ce qu'**une conduite de pression (32) part de la pompe de pression (29), laquelle se divise, au niveau d'un point de dérivation (26), en la conduite d'alimentation de machine électrique (59) et en la conduite d'alimentation de transmission (30).

4. Véhicule à fonctionnement électrique selon la revendication 2 ou 3, **caractérisé en ce que** le lubrifiant (31) qui s'égoutte depuis le point de lubrification de transmission (Z1, Z2) s'accumule dans le carter à lubrifiant (33), et que le lubrifiant (31) qui s'écoule de la machine électrique (1) s'accumule également dans le carter à lubrifiant (33), et de là il peut être renvoyé dans le réservoir de lubrifiant (25) au moyen de la pompe de retour (35) configurée à cet effet.

5. Véhicule à fonctionnement électrique selon la revendication 4, **caractérisé en ce que** la pompe de pression (29) et la pompe de retour (35) forment une pompe double (58) avec un arbre d'entraînement commun (61), et **en ce que** l'arbre d'entraînement commun (61) est en liaison cinématique avec un moteur électrique (63) qui peut être commandé par un contrôleur de pompe (47) configuré à cet effet.

6. Véhicule à fonctionnement électrique selon l'une des revendications précédentes, **caractérisé en ce que** la pompe de pression (29) est également associée au circuit hydraulique d'accouplement séparateur (T), de sorte que le véhicule à fonctionnement électrique est configuré pour, qu'en mode pompage, le lubrifiant (31) peut également circuler dans le circuit hydraulique d'accouplement séparateur (T).

7. Véhicule à fonctionnement électrique selon la revendication 3 et la revendication 6, **caractérisé en ce que** la conduite de pression (32), la conduite d'alimentation de transmission (30) ou la conduite d'alimentation de machine électrique (59) possède un point de dérivation à partir duquel est dérivée la conduite d'alimentation d'accouplement séparateur.

8. Véhicule à fonctionnement électrique selon l'une des revendications précédentes, **caractérisé en ce que** le circuit hydraulique d'accouplement séparateur (T) est configuré de telle sorte qu'une lubrification interne de l'accouplement séparateur (18) peut être réalisée au moyen du circuit hydraulique d'accouplement séparateur (T), au niveau duquel un canal à lubrifiant (40) est formé dans l'une des portions d'arbre (9, 10) et débouche sur une face frontale de la portion d'arbre (10) dans une chambre d'accouplement (47) de l'accouplement séparateur (18).
